# EUROPEAN PATENT SPECIFICATION

(11) **EP 1 593 602 B1**
(45) Date of publication and mention of the grant of the patent: **22.08.2007**
(21) Application number: 05006214.0
(22) Date of filing: 22.03.2005
(51) Int. Cl.: B65B 43/48, B65G 1/137, B65G 47/52

(54) **Method and apparatus for the handling and replacement of loading units such as boxes, postal containers or the like**
Verfahren und Vorrichtung für die Handhabung und Wiedereinsetzung der Ladenmaßeinheiten wie Kästen, Postbehälter oder dergleichen
Procédé et dispositif pour la manipulation et remplacement des ensembles de chargement tels que des boîtes, des conteneurs postaux ou analogues

(30) Priority: 04.05.2004 IT PC20040019
(43) Date of publication of application: 09.11.2005
(73) Proprietor: Calcagno, Mario, 20026 Novate Milanese (MI) (IT)
(72) Inventor: Calcagno, Mario, 20026 Novate Milanese (MI) (IT)
(74) Representative: La Ciura, Salvatore

(56) References cited:
- EP-A- 0 798 239
- DE-A1- 1 786 139
- US-A- 4 010 594
- US-A- 4 527 937

## Description

This invention relates to a method for the handling and replacement of loading units according to the preamble of claim 1 such as postal containers, crates, boxes and the like wherein, in order to move a full container and replace it with an empty one, the empty container is used as pusher to remove the container to be picked up without changing its original geometry. For example, the method according to the invention can be used in postal sorting systems, where a container must be replaced with an empty one whenever a mail container to be forwarded to a certain destination has been filled.

Another application is that of mass distribution or order management, for example in the case of spare parts warehouses, where a number of different products need to be taken from the same number of containers for each order, and the containers must be conveyed to the operator in a pre-determined order.

There are numerous situations in which loading units such as boxes, containers and the like need to be moved, and different solutions are known for this purpose.

For example, sorting apparatus, used mainly for mail, is known, which automatically unloads packages and letters into containers designed to receive the mail to be sent to a certain district.

In large plants these containers are numerous, often amounting to several hundred, and whenever they are filled they need to be picked up and replaced with the same number of empty containers.

This operation is usually performed by hand, which involves effort and wasted time.

Plants with dynamic warehouses are also known, wherein one or more mobile structures (storage and retrieval machines and the like) move along two or more rows of shelving to pick up boxes or containers of material stored at different levels, take them to an area where the necessary parts are picked up and the operator prepares the material ordered for despatch, and replace them on the shelves.

In this case the boxes are handled mechanically; the mobile structure (storage and retrieval machine or the like) or robot picks up the boxes from the warehouse, deposits them close to the operator, and later picks them up and returns them to their original position.

This system involves wastage of energy and longer management times, because the machine must perform one trip to carry the incoming container and a subsequent trip to pick up the outgoing containers from the area where the operator is located and return them to the shelf.

U.S. 4.010.594 discloses a method for the handling and replacement of loading units wherein said loading units to be replaced are positioned on a bay to receive the contents, where said method includes the following stages:
- new empty loading units are positioned on a waiting line next to said bay, each one being positioned alongside the loading unit to be replaced;
- as each loading unit on the bay is filled, the corresponding loading unit present on the waiting line is activated to push the filled loading unit out of the bay, towards pick-up devices, occupying the position previously occupied by the removed loading unit;
- the empty loading units positioned on the waiting line upstream of the unit pushed onto the bay are caused to advance by one interval;
- a new empty loading unit is positioned on the waiting line if necessary, upstream of the ones which have just advanced by one interval.

This document also teaches an apparatus for the handling and replacement of loading units in a plant, comprising means designed to advance second loading units along a waiting line until each of them is positioned against moveable stop means; pusher means designed to engage said second loading units on said waiting line and push them against said first loading units positioned on said bay, to push them towards pick-up devices and occupy the place previously held by said first loading units; means designed to advance by one interval the second empty loading units on said waiting line which are positioned upstream of said loading unit introduced onto the bay.

The present invention, which falls into this sector, relates to a method for the handling and movement of a loading unit, according to the appended claim 1.

In order to clarify the invention, two embodiments of the method will now be described in detail: one relating to handling of containers associated with a mail sorting plant and the other to order preparation in a spare parts warehouse or mail order warehouse.

The description that follows, which is provided by way of example but not of limitation, refers to the annexed drawings wherein:
- figure 1 schematically illustrates a loading unit transfer area in a plant that uses a method not part of the present invention;

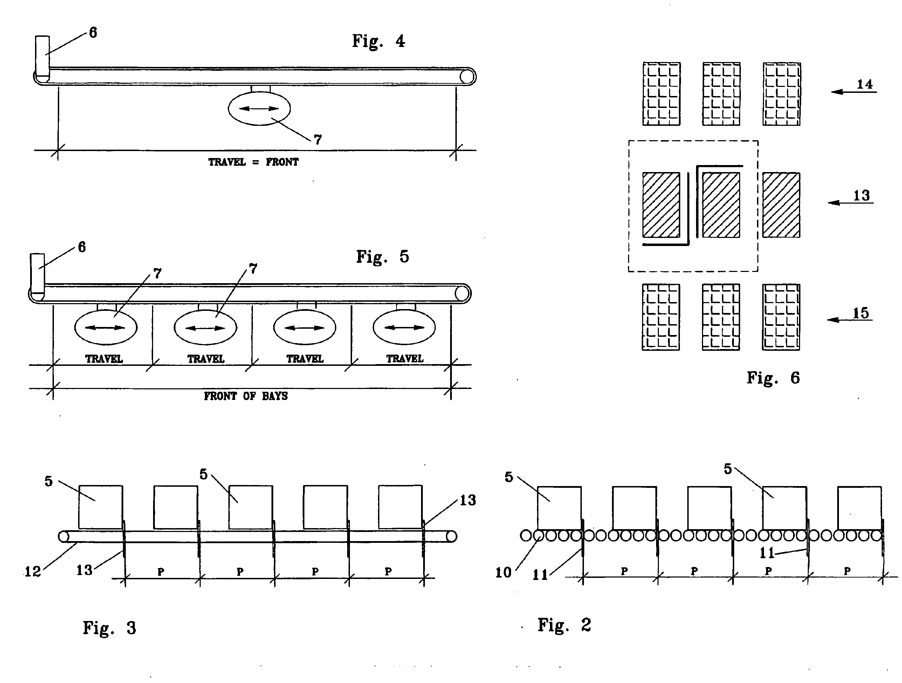

- figures 2 and 3 schematically illustrate the line of empty loading units in a plant that uses a method not part of the present invention;
- figures 4 and 5 schematically illustrate the carriage which moves the loading unit in a plant;
- figure 6 schematically illustrates the system whereby the pushers fitted to the carriage engage the empty loading units and cause them to push the full units to be removed;
- figure 7 schematically illustrates a loading unit transfer area in an order preparation plant using a method according to the invention.

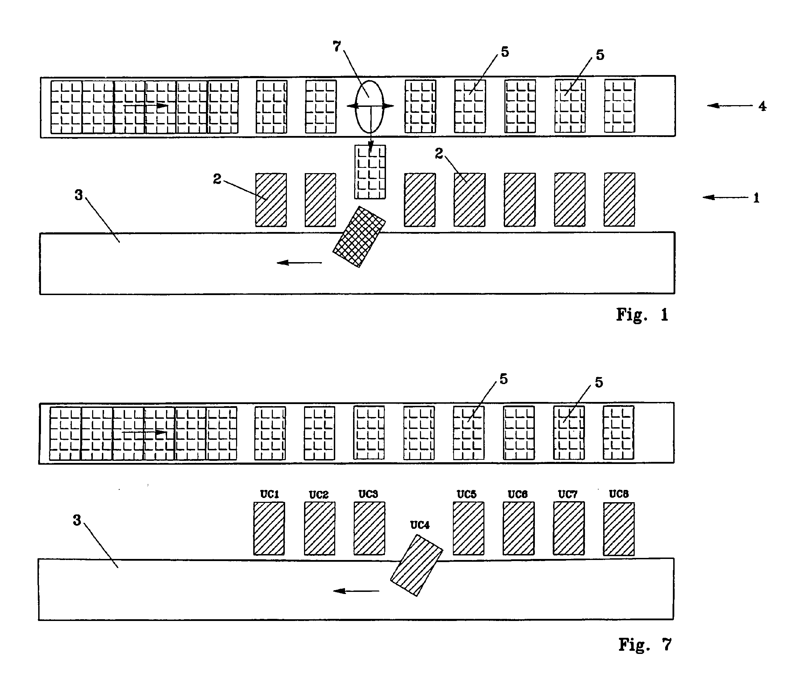

As shown in figure 1, no. 1 indicates a line of bays in which loading units 2 at the filling stage are positioned, spaced at pre-determined intervals.

These units may be boxes, mail containers or the like.

Downstream of the bay there is a collection and pick-up device 3, which may, for example, be a chute or a conveyor belt, while upstream of the line of bays is the empties line, shown as 4, along which empty loading units 5 arrive.

The empty loading units take up a position alongside units 2 at the filling stage, with the same interval between them as the latter.

The empties line consists of a conveyor which may, for example, be a motor-driven friction roller conveyor 10 associated with a set of stop means 11, which are positioned on the route of the incoming loading units and stop each of them in a position corresponding to that of the loading units at the filling stage on the bays in line 1.

Alternatively, the empties line may be constituted by a belt conveyor 12, with interposed raisable supports 13 or other mobile devices.

These stop means may be pins or other stop elements which are vertically mobile and are inserted between the rollers or between the belts of the conveyor to engage and lock the incoming loading unit at the correct interval.

Said stop means move independently of one another so that, when a loading unit is sent from the empties line to the line of bays, all the loading units downstream of the one concerned are locked, and all those upstream of it are moved forward one interval so that they occupy the space previously occupied by the latter. Units 5 will therefore only be replaced in the last position in the queue.

The apparatus is also associated with a carriage 7, driven by a motor 6, which moves along the entire filling and unloading area, parallel to the direction of advance of the units.

This traversing carriage can be installed at the side of or above the empties line.

The configuration with the carriage installed above the line allows bilateral use of the system, as schematically illustrated in figure 6, wherein a line of empties 13 serves two lines of bays 14 and 15, and the filled loading units can be pushed towards one or other of the collecting systems.

Lateral positioning of the carriage only allows a monolateral plant to be made, but is much more compact in terms of height.

For the use of the plant, the first operation is to position an empty loading unit on each bay.

While these units are being filled, for example by a mail sorting plant installed above the line or another system, new loading units advance on the empties line, positioned at the same intervals as the units on the bays.

When a loading unit on the bay line has been filled and is ready to be evacuated, carriage 7, which moves parallel to the line of bays, takes up a position alongside the unit to be replaced and moves the corresponding empty loading unit, causing it to slide against the loading unit just filled, which is pushed by the empty loading unit towards evacuation line 3.

Thus the full loading unit is removed, and simultaneously replaced by a new one.

The machine, controlled by an electronic control system such as a PLC or the like, causes the loading units to advance by one interval P along the line of empties which are positioned upstream of the area where the pick-up has just taken place, while a new loading unit will proceed to cover the last position, which remains empty, at the last bay, to restore the initial position of the system.

The control system monitors the advance of evacuation line 3, by means of encoders or the like, managing the position of the loading unit which moves integral with line 3 and the precedences on the line between the loading units in transit and those leaving the bays, stopping the movement of the carriage if necessary or sending it to another outgoing position which requires replacement, and at which precedence problems have been solved. The control system consequently also knows the route of the loading unit leaving the system.

We will now examine the case of application of the method to order preparation, for example in an organisation in which the operative must pick up articles to be despatched, such as a mail order business or spare parts warehouse, taking each of said articles from a different container in a pre-set sequence so that, for example, the heavier articles can be positioned first at the bottom of the parcel to be sent, followed by the lighter ones.

Suppose, for example, as shown in figure 7, that loading units UC1... UC8 containing the various articles required to make up the order, which have been picked up from a warehouse, are positioned on the bay line in random order to optimise pick-up from the warehouse without having to activate pick-up journeys in accordance with the pre-set sequence.

These loading units, which may be drawer units, crates or the like, are transferred on a conveyor belt 3 which takes them to the location of the order preparation operative in a precise sequence.

Suppose, for example, that for the purpose of order preparation the articles contained in loading unit no. UC4 need to be picked up first, followed by those in loading unit no. UC1, then those in unit nos. UC3, UC5 in succession, etc.

The electronic control system that manages the plant also memorises the articles relating to the next order to be fulfilled, and activates the various items of equipment to pick up the required loading units from the warehouse and take them to the bay line. A buffer of service boxes, which may be empty, will be positioned upstream of the system, and loading units may be taken from it if the next sequence consists of a smaller number of loading units than the preceding one, or in the temporary absence of further loading units.

The loading units for the second order are picked up from the warehouse in a sequence that allows the carriages or warehouse pick-up devices to follow an optimised route.

When the first loading unit for the second order is picked up, it is transported to the side of the bay line alongside the first loading unit for the first order to be evacuated: in this specific case alongside loading unit no. UC4.

The pushers transfer to the bay line the loading unit for the second order, which pushes out loading unit UC4 for the first order; said unit UC4 is then transferred to conveyor 3 and conveyed to the order preparation area.

The next loading unit of the second order, which is always chosen with a view to optimising the route of the upstream system, is positioned alongside the second loading unit for the first order to be picked up: in this specific case alongside unit no. UC1, which is thus transferred to conveyor belt 3.

All the loading units relating to the first order are gradually transferred, in the correct sequence, to conveyor 3, and replaced by the loading units for the second order which, at the end of the process, will be positioned on the bay line in random order.

On the basis of the data relating to the next order, the machine then repeats the cycle by picking up the loading units for the third order in the sequence that optimises the route, and transfers them to the bay line so as to push the loading units for the second order onto the conveyor belt in the required sequence.

As will clearly appear from the description provided, the method according to the invention, offers considerable advantages.

In particular, it almost eliminates down time for replacements (which, in the methods according to the state of the art, are due to operations involving the extraction of the loading unit from the bay, the movement of the machine and the return of the new loading unit to the bay) and reduces routes and kinematic mechanisms and the movements of the moving parts of the machinery in absolute terms, with lower energy consumption, higher dynamic values of the machinery (speed and acceleration), and a reduction in load-bearing structures and wear.

The advantages deriving from this invention are therefore a considerable increase in productivity, a reduction in labour, a reduction in maintenance, low energy consumption, a reduction in the space required at the end of travel, the containers stored being equal, and last but not least, a considerable reduction in the investments required.

An expert in the field could devise various modifications and variations, all of which should be deemed to fall within the scope of the appended claims.

## Claims

1. Method for handling and movement of loading units (UC₁ ... UC_{N}) which contain articles to be picked up and which, in each handling cycle, must be taken to an operational area in a pre-set sequence, wherein a plurality of first loading units (UC₁...UC_{N}) are positioned in a row on a bay, and in which new empty loading units (5) are positioned on a line next to said bay, each one being positioned alongside the loading unit (UC₁..... UC_{N}) to be replaced and is activated to push said loading unit out of the bay, towards pick-up devices (3), occupying the position previously occupied by the removed loading unit;
**characterised in that** said method includes the following stages:
• the loading units (UC₁...UC_{N}) for a first handling cycle are positioned in random order on a bay;
• the loading units (5) for the second handling cycle are picked up from a warehouse in a sequence that optimises the route of the retrival devices;
• each loading unit (5) for the second cycle is positioned alongside the loading unit (UC₁...UC_{N}) for the first cycle to be handled, and said first cycle loading unit (UC₁...UC_{N}) is pushed towards means (3) designed to direct it to the operational area, using the loading unit (5) in the second cycle to push it in the correct pre-set sequence towards said pick-up means (3);
• service loading units are recirculated from and to a specific buffer if the subsequent loading units required to expel those of the current sequence are insufficient or temporarily missing;
• the same procedure is repeated with the other loading units, in the sequence in which they must be taken to the operational area.

2. Method for handling and movement of loading units according to claim 1, wherein:
• when the first loading unit (5) for the second order is picked up, it is transported to the side of the bay line alongside the first loading unit (UC₄) for the first order to be evacuated;
• a pusher transfers to the bay line the loading unit (5) for the second order, which pushes out loading unit (UC₄) for the first order;
• said unit (UC₄) is then transferred to conveyor (3) and conveyed to the order preparation area;
• the next loading unit (5) of the second order is positioned alongside the second loading unit (UC1) for the first order to be picked up;
• all the loading units (UC₁...UC_{N}) relating to the first order are gradually transferred, in the correct sequence, to conveyor (3), and replaced by the loading units (5) for the second order which, at the end of the process, will be positioned on the bay line in random order.

## Patentansprüche

1. Methode zum Transport und zur Beförderung von mit zu entnehmenden Artikeln beladenen Ladeeinheiten (UC1 ...... UCN), die bei jedem Transportzyklus in einen Arbeitsbereich nach einer vorgegebenen Sequenz gebracht werden müssen, bei welcher eine Vielzahl von ersten Ladeeinheiten (UC1 ...... UCN) in eine Reihe auf einen Träger gestellt werden, und bei welcher neue leere Ladeeinheiten (5) in eine Reihe nahe bei besagtem Träger aufgestellt werden, wobei jede Ladeeinheit in Übereinstimmung mit der zu ersetzenden Ladeeinheit (UC1 ...... UCN) aufgestellt und angetrieben wird, um besagte Ladeeinheit aus ihrem Träger in Richtung von Entnahmevorrichtungen (3) zu schieben und um eine Lage einzunehmen, die die herausgenommene Ladeeinheit vorher eingenommen hatte; **gekennzeichnet durch** die Tatsache, dass diese Methode die folgenden Phasen umfasst:
• man stellt die Ladeeinheiten (UC1 ...... UCN) bezüglich eines ersten Transportzyklus in zufälliger Reihenfolge auf einen Träger;
• man holt die Ladeeinheiten (5) bezüglich des zweiten Transportzyklus aus einem Lager, gemäß einer Reihenfolge, die den Verlauf der Entnahmevorrichtungen optimiert;
• man bringt jede Ladeeinheit (5) des zweiten Zyklus in Übereinstimmung mit der zu transportierenden Ladeeinheit (UC1 ........ UCN) des ersten Zyklus und schiebt besagte Ladeeinheit (UC1 ......... UCN) des ersten Zyklus in Richtung von Mitteln (3), die geeignet sind, sie in den Arbeitsbereich zu leiten, wobei man die Ladeeinheit (5) des zweiten Zyklus dazu benutzt, sie nach der vorgesehenen richtigen Reihefolge in Richtung besagter Entnahmevorrichtungen (3) zu schieben;
• Service-Ladeeinheiten werden von und zu einem speziellen Buffer in Umlauf gebracht, für den Fall, dass die nachfolgenden Ladeeinheiten, die notwendig sind, um diejenigen der sich in Bearbeitung befindlichen Sequenz herauszuschieben, unzureichend sind oder zwischenzeitlich fehlen;
• man wiederholt die gleiche Prozedur mit den anderen Ladeeinheiten gemäß der Reihenfolge, in der sie in den Arbeitsbereich gebracht werden müssen.

2. Methode zum Transport und zur Beförderung von Ladeeinheiten nach Anspruch 1, wobei:
• wenn die erste Ladeeinheit (5) des zweiten Auftrags entnommen wird, wird sie bis zur Seite des Trägers in Übereinstimmung der zu räumenden ersten Ladeeinheit (UC4) des ersten Auftrags befördert;
• eine Schiebevorrichtung schiebt die Ladeeinheit (5) des zweiten Auftrags zur Trägerlinie, die die Ladeeinheit (UC4) des ersten Auftrags herausschiebt;
• besagte Einheit (UC4) wird dann auf die Transportanlage (3) geschoben und in den Bereich gebracht, wo der Auftrag vorbereitet wird;
• die nachfolgende Ladeeinheit (5) des zweiten Auftrags wird in Übereinstimmung der zu entnehmenden zweiten Ladeeinheit (UC1) des ersten Auftrags aufgestellt;
• alle nachfolgenden Ladeeinheiten (UC1....UCN) bezüglich des ersten Auftrags werden allmählich in der richtigen Reihenfolge auf die Transportanlage (3) verschoben und durch die Ladeeinheiten (5) des zweiten Auftrags ersetzt, die sich am Ende des Prozesses auf der Trägerlinie in zufälliger Reihenfolge befinden werden.

## Revendications

1. Méthode de manutention et de déplacement d'une série d'unités de chargement (UC₁ ..... UC_{N}) contenant des articles à prélever qui, pour chaque cycle de manutention, doivent être amenées dans une zone de travail selon un ordre bien précis, où plusieurs premières unités de chargement (UC₁ ..... UC_{N}) sont disposées en rang sur un support, et où les nouvelles unités de chargement vides (5) sont disposées sur une autre rangée près dudit support, chacune d'entre elles étant respectivement située à hauteur de l'unité de chargement (UC₁ ..... UC_{N}) qu'elle viendra remplacer et actionnée de façon, premièrement, à pousser ladite unité de chargement hors de son support, en direction des dispositifs de prélèvement (3) et, deuxièmement, à prendre la place qu'occupait avant elle l'unité de chargement déplacée ;
**caractérisée par le fait que** ladite méthode se compose des différentes étapes ci-après :
• On dispose les unités de chargement (UC₁ ..... UC_{N}) relatives à un premier cycle de manutention sur un support dans un ordre quelconque;
• On prélève les unités de chargement (5) relatives au deuxième cycle de manutention de façon telle à optimiser le parcours des dispositifs de prélèvement ;
• On amène chaque unité de chargement (5) du deuxième cycle à hauteur de l'unité de chargement (UC₁ ..... UC_{N}) du premier cycle de manutention et l'on dirige ladite unité de chargement (UC₁ ..... UC_{N}) du premier cycle vers des dispositifs (3) chargés de la diriger vers la zone de travail, en utilisant l'unité de chargement (5) du deuxième cycle pour la pousser, dans l'ordre correct préétabli, vers lesdits dispositifs de prélèvement (3) ;
• On fait recirculer les unités de chargement en service de et pour un buffer dans le cas où les unités de chargement successives nécessaires pour expulser les unités de la séquence en cours s'avèrent insuffisantes ou temporairement manquantes ;
• On recommence la procédure avec les autres unités de chargement, dans l'ordre selon lequel ces dernières doivent être amenées dans la zone de travail.

2. Méthode de manutention et de déplacement d'une série d'unités de chargement selon la revendication 1, où :
• Quand la première unité de chargement (5) du deuxième cycle est prélevée, elle est amenée à côté du support, à hauteur de la première unité de chargement (UC₄) du premier cycle, à évacuer :
• Un dispositif d'avance transfère l'unité de chargement (5) du deuxième cycle vers la rangée de support, de façon que celle-ci pousse l'unité de chargement (UC₄) du premier cycle hors de ladite rangée ;
• Ladite unité (UC₄) est ensuite transférée vers le dispositif de prélèvement (3) et amenée dans la zone de préparation de la commande ;
• L'unité de chargement suivante (5) du deuxième cycle est amenée à hauteur de la deuxième unité de chargement (UC₁) du premier cycle à prélever ;
• Toutes les unités de chargement suivantes (UC₁....UC_{N}) relatives au premier cycle sont progressivement transférées, dans l'ordre préétabli, sur le dispositif de prélèvement (3) et remplacées par les unités de chargement (5) du deuxième cycle qui, à la fin du processus, se retrouveront sur la rangée de support dans un ordre quelconque.
